# EUROPEAN PATENT APPLICATION

(11) **EP 4 564 219 A1**
(43) Date of publication of application: **04.06.2025**
(21) Application number: 24215760.0
(22) Date of filing: 27.11.2024
(51) Int. Cl.: G06F 40/103, G06F 40/106, G06N 20/00, G06V 30/414, G06T 1/00

(54) **SYSTEMS AND METHODS FOR ASPECT RATIO ADJUSTMENT**

(30) Priority: 30.11.2023 AU 2023274181
(71) Applicant: Canva Pty Ltd., Surry Hills, New South Wales 2010 (AU)
(72) Inventor: TUNE, Paul Li Shern, Surry Hills, NSW 2010 (AU); ALEXANDER, Benjamin Phillip, Surry Hills, NSW 2010 (AU)
(74) Representative: Chettle, John Edward

(57) **Abstract**

Embodiments of a computer implemented method for document element layout adjustment, are described. In some embodiments dimension data, elements data and region modification data are encoded into encoding data, which is input into a trained machine learning model, which determines modified elements data defining a modification to layout characteristics. In some embodiments dimension data, elements data and region modification data are encoded into encoding data, which is then modified based on excluded elements data, prior to input into a trained machine learning model for determining modified elements data defining a modification to layout characteristics.

## Description

### FIELD

The present disclosure is directed to systems and methods for image processing for aspect ratio adjustment.

### BACKGROUND

A document typically has at least one page with specific dimensions and is typically associated with a number of document elements in a specific page layout.

Page layout refers to the arrangement of visual elements on a page. It involves the organisation of text, images, and other document elements within a page. When selecting a page layout it is often a goal that the page layout enables easy comprehension and a clear conveyance of information to a reader.

When a document page is resized such that its aspect ratio (i.e., the proportional relationship between the width and height of the page) is changed, it is often necessary to adjust the page's layout accordingly. Such adjustment may require a document designer to manually change the location and size of a number of document elements on the page. Depending on the number of pages and the number of document elements on each page, such layout adjustments may become unduly burdensome. For example, a designer may be required to review and adjust all document elements manually until the desired layout is achieved. Depending on the number of regions that require resizing and the number of document elements within each of those regions, such manual layout adjustments may become unduly burdensome and require substantial resources.

Whilst some automated methods for adjusting layout of elements in a document currently exist, there remains a need for further development in automated page layout adjustment to reflect a page resize.

### SUMMARY

Embodiments of a computer implemented method for document element layout adjustment, include accessing, by a computer system, region data defining a region of a document, wherein the region data includes dimension data defining dimensions of the region, and elements data defining layout characteristics of a plurality of document elements within the region and accessing, by the computer system, region modification data describing data to resize the region. The method further includes encoding, by the computer system, the dimension data, the elements data and the region modification data into encoding data, inputting, by the computer system, the encoding data into a trained machine learning model that, in response, determines modified elements data defining a modification to the layout characteristics of one or more of the plurality of document elements based on the region modification data, and outputting data defining an adjusted layout of the document, wherein the adjusted layout is defined by the modified elements data.

Also described are embodiments of a computer implemented method for document element layout adjustment, that include accessing, by a computer system, a) region data defining a region of a document, wherein the region data includes dimension data defining dimensions of the region, and elements data defining layout characteristics of a plurality of document elements within the region, b) region modification data describing data to resize the region, and c) excluded elements data defining which layout characteristics of which document elements are to be excluded from the document element layout adjustment method, wherein the excluded elements data includes references to one or more document elements defined by the elements data, and layout characteristics of each of the referenced document elements wherein such layout characteristics are to be excluded from the document element layout adjustment method. The method further includes encoding, by the computer system, the dimension data, the elements data and the region modification data into encoding data, modifying, by the computer system, the encoding data based on the excluded elements data, inputting, by the computer system, the encoding data into a trained machine learning model that, in response, determines modified elements data defining a modification to the layout characteristics of one or more of the plurality of document elements based on the region modification data, and outputting data defining an adjusted layout of the document, wherein the adjusted layout is defined by the modified elements data.

Also described are computer processing systems including a processing unit; and a non-transient computer-readable storage medium storing instructions, and non-transient storage media storing executable instructions, which when executed by the processing unit, cause the processing unit to perform a method for document element layout adjustment, in particular either method described in the immediately preceding paragraphs.

### BRIEF DESCRIPTION OF THE DRAWINGS

FIG. 1 is a diagram depicting a networked environment in which various features of the present disclosure may be implemented.
FIG. 2 is a block diagram of a computer processing system configurable to perform various features of the present disclosure.
FIG. 3 is a block diagram of an example computer software application in which various features of the present disclosure may be implemented.
FIG. 4A depicts an example resizable region in relation to which various features of the present disclosure may be described.
FIG. 4B depicts an example resized region containing modified document elements in relation to which various features of the present disclosure may be described.
FIG. 5 depicts operations performed in automatic layout determination.
FIG. 6 depicts operations performed for preparing resizable region data and region modification data.
FIG. 7 depicts operations performed for determining modified elements data.

### DETAILED DESCRIPTION OF THE EMBODIMENTS

In the following description numerous specific details are set forth in order to provide a thorough understanding of the claimed invention. It will be apparent, however, that the claimed invention may be practised without these specific details. It should also be understood that the drawings and detailed description are not intended to limit the invention to the particular form disclosed. The intention is to cover all modifications, equivalents, and alternatives falling within the scope of the present invention as defined by the appended claims. In some instances, well-known structures and devices are shown in block diagram form in order to avoid unnecessary obscuring.

The present disclosure is generally concerned with automated methods for adjusting a layout of document elements positioned within a resizable region of a document. As used herein the term "adjusting" and any similar terms like "adjust" are used in a broad sense. For example adjusting a value includes modifying the value and also includes replacing the value with a new value. The automated methods are implemented by a computer system and the document is therefore represented by document data readable by the computer system (such a document is herein referred to as a "digital document").

A first characteristic of a resizable region is that its dimensions may be modified (e.g., by a designer person and through a graphical user interface of a designer software application provided on a computer system). A second characteristic of a resizable region is that it may contain at least one document element (e.g., text or an image) within the boundary of its dimensions.

By way of example, a resizable region may refer to a single page within a digital document of one or more pages, which is typically associated with page dimensions and may contain several document elements within its boundary. By way of other examples, a resizable region may refer to a bounding box that contains one or more document elements, or to a canvas area within a page, or to a document element capable of containing other document elements.

For simplicity and clarity of explanation, the methods disclosed herein are described primarily with examples involving automatic layout change in a document page, in response to a change made to the page's dimensions. However, it will be appreciated that the same methods may be applied for automatically adjusting layout of document elements positioned within any resizable region. It will also be appreciated that the methods described herein may be recursively applied to certain document elements (e.g., where a "parent" document element contains another "parent" document element which in turn contains a number of "child" document elements).

A resizable region is defined by resizable region data, which describes the resizable region and includes at least dimension data (e.g., page width and height). The dimension defined by the dimension data may be specified by any appropriate measure, for example by a number of pixels, by a measure of distance or with reference to a standard size, for example the A4 or Letter paper sizes. A resizable region is associated with or includes elements data, which includes values defining characteristics of one or more document elements within or associated with the resizable region including, e.g., document element identifiers, and/or one or more layout characteristics, such as a width and height of each document element and the position of each document element.

For the remainder of this disclosure it is assumed that the elements data is a part of the resizable region data, so that for example when resizable region data is said to be received, it includes receiving the elements data included in the resizable region data. In other embodiments the resizable region data does not include the elements data and is instead associated with elements data (e.g. through a data linkage). In that case, for example, references below to receiving the resizable region data include also receiving the associated elements data.

The resizable region is resizable according to region modification data, which describes data to resize a resizable region (e.g., new page width and/or height). The region modification data changes the size of at least one dimension of the resizable region. In some embodiments, the region modification data specifies a change in aspect ratio of the resizable region. A simple but common example of region modification data in relation to a page and which involves a change in aspect ratio is to change the page from a portrait orientation to a landscape orientation.

Region modification data may be specified by a document designer through a graphical user interface of a document designer software application. Region modification data may also be available through other means (e.g., importing from a data file).

When a resizable region is resized according to region modification data, and especially when such resizing results in a change in the aspect ratio of a resizable region, it is often necessary to adjust the layout of the document elements positioned within the resizable region. This adjustment may be required to help ensure the document stays meaningful and information is clearly conveyed.

The layout adjustment includes adjusting at least the position or size of at least one document element. The layout adjustment may further include adjusting one or more other characteristics of at least one document element, for example one or more of: the aspect ratio and the orientation or rotation. In some embodiments, one or more characteristics of one or more document elements are adjustable and one or more other characteristics are fixed, so their values are preserved. For example, the position and size of a document element may be adjustable and the aspect ratio and orientation of that document element may be fixed. In some embodiments, the elements data for a document element includes data that indicates whether or not a characteristic of the document element is fixed for the purposes of adjusting the layout responsive to a resizing of a resizable region containing the document element.

In this disclosure, methods and systems are described that enable automatic adjustment of layout of document elements positioned within a resizable region in response to region modification data, to determine a new layout that is different. Machine learning techniques are employed for the purpose of adjusting layout of document elements positioned within a resizable region in response to region modification data, which as described above includes a change to at least one dimension of the resizable region.

In some embodiments, functionality is provided to exclude a subset of document elements positioned within a resizable region from being affected by the process of automatic layout adjustment. Such exclusion of certain document elements may be desirable for a variety of reasons. By way of example, such exclusion may be intended where a document designer manually specifies the position and dimensions of certain document elements prior to initiating the methods disclosed herein. Such excluded elements are defined by excluded elements data which may include references to one or more document elements (e.g., the element identifiers of such elements) and the characteristics of each such element to be excluded from the process of automatic adjustment of layout. By way of example, excluded elements data may include the identifier of one element and position and dimension data associated with that element. Such position and dimension data may be the same as or different to position and dimension data of the corresponding document element in elements data.

To enable the application of machine learning techniques, the disclosed methods include encoding at least a portion of the resizable region data and region modification data into respective encoded data. The encoded data is then processed by the trained machine learning model to determine one or more new layouts, specified by modified elements data. The modified elements data is the elements data including modified values that define one or more adjusted characteristics of one or more document elements. For example, the modified values may include new values for the position, or new values for the position and dimensions, of one or more document elements within the resized region. In other examples other combinations of elements data have their values changed between the elements data and the modified elements data.

The modified elements data may be associated with modified resizable region data, which is the resizable region data modified in accordance with or which otherwise reflects the region modification data. Accordingly and for example, the combination of the modified resizable region data and modified elements data defines a new page of a digital document with a new layout of document elements on the page. The modified elements data may be used to update the visible positions and/or dimensions or other visible characteristics of document elements on a document page, for example when the document page is displayed on a computer display device or when the document page is printed.

In some embodiments, the determination of modified elements data is an iterative process. This process may commence by masking the data items associated with the characteristics of document elements that may be determined by the machine learning model. The characteristics of the document elements that do not need to be determined (i.e., those elements included in excluded elements data) may not be masked. In each iteration of the iterative process, a subset of the modified elements data is determined, eventually producing the complete modified elements data.

The methods disclosed herein also include training a machine learning model with training data in several iterations. In each iteration, a portion of the training data is masked. The machine learning model is trained to become capable of receiving resizable region data, elements data and region modification data and, in response, predicting appropriate modified elements data.

In the following, initially, an example document format is provided. An example environment and a computer processing system which can be configured to perform the features described herein are then described. This is followed by describing various methods for automatically determining the layout of document elements positioned within a resizable region and training the required machine learning model.

### Example document format

Various document formats are available. This section describes an example document format that is used throughout this disclosure. The processing described herein can be adapted to apply to alternative document formats.

The document may be, but is not necessarily, made up of a number of pages. Each page defines an area that is intended to be viewed as a discrete whole and may be described by a page descriptor. A page will have certain page attributes, for example a page identifier, a page width, and a page height and the page descriptor includes data defining these page attributes. At least the page width and the page height form part of the resizable region data described herein - they represent the dimension data.

A page has an associated coordinate system (typically a common coordinate system provided by the design tool for creating or editing the pages). In the present disclosure, the page coordinate system is a Cartesian coordinate system defining a horizontal (x) axis (with values increasing from left to right) and vertical (y) axis (with values increasing from top to bottom).

A page (e.g. specified by the page identifier) is associated with one or more document elements, which may be specified in a list (or array, tree, or other data structure) of document elements within or associated with the page descriptor.

Elements data for one or more document elements of a page is stored in a device independent page descriptor. By way of example, a page descriptor may be stored in a JSON format file such as the following:

| |
|---|
| ```
            {
               "design": {
              "id": "ab120223",
                "creationDate": "1 jun-2020",
                "dimensions": {
                  "width": 1080,
                  "height": 1080
              },
              "elements": [
               {...},
               {...},
               ...
               {...}
           ],
``` |
| ```
             }
           }
``` |

In this example, the page descriptor includes page metadata (e.g., a page identifier, a page creation date, and page dimensions (a height and a width) and element data, which in this example is an array of element descriptors in respect of document elements that have been added to the page (described below).

As previously described, document elements are added to or included in a page of a digital document. The digital document may be received with document elements already added. Document elements may be imported. Document elements can also be drawn or created using one or more design tools (e.g. text/line/rectangle/ellipse/curve/freehand and/or other design tools).

A document element that has been added to a page (and added to the page's element list) may be identified in various ways. For example, a document element may be identified by its position (index) in the element list. Alternatively (or in addition), a document element may be assigned an element identifier that is unique at least within the page that the document element has been added to.

A given document element has associated element attributes. The particular element attributes that are or can be associated with a given document element may depend on the type of document element in question. By way of example, however, element attributes may include one or more of those shown in the table below:

| **Element attribute** | **Description** |
|---|---|
| Identifier | Identifier for the element (unique at least within the page the element has been added to). |
| | Alternatively, the position (index) of the element within an element list may be used to identify an element. |
| Class | Identifier of a type of the document element. For example, a text element, an element specifying an area with a colour, a shape element, an image element, a line element, a grid element, a chart element, a vector graphic element, a raster graphic element, a video element, an element group, or an alternative type of element. |
| Top | The y coordinate of the element's origin (e.g. y coordinate of the top left corner). |
| Left | The x coordinate of the element's origin (e.g. x coordinate of the top left corner). |
| Width | A value defining the width of the element. |
| Height | A value defining the height of the element. |
| Rotation | A value defining a degree of rotation of the element, e.g. a value x such that -180 degrees <= x <= +180 degrees. |
| Content data | Data defining any content of the element - for example the text of a text element, an image source (or image data) for an image element, etc. |
| | For text the data field may include both character data (e.g. an array/list or other set of actual characters - e.g. Unicode values) and character attribute data (e.g. an array/list or other set of character attributes that apply to the characters). |

Additional (and/or alternative) element attributes are possible. At least some of the element attributes have values defining the characteristics of the document elements that may be adjusted when determining modified elements data. In other words, the element attributes are the part of the elements data defining the characteristics of the document elements that are modified when determining a new layout, such as position and/or size.

Element attributes for a given document element may be stored in an element descriptor (which is included in the page's element list). For example:

| |
|---|
| ```
        {
          "design": {
          ...
           },
           "elements": [
            {
             "type": "TEXT",
             "top": 100,
             "left": 100,
             "width": 500,
             "height": 400,
             "rotation": 0,
             "Data": {{character data},{character attribute data}}
           }
          ],
        }
       }
``` |

### Environment

The techniques disclosed herein are described in the context of a design platform that is configured to facilitate various operations concerned with digital documents. In the context of the present disclosure, these operations relevantly include processing a resizable region of a digital document that includes one or more document elements, to resize the resizable region and to automatically (i.e. without user input specifying a new layout) determine a new layout of the document elements positioned within the resized region.

A design platform may take various forms. In the embodiments described herein, the design platform is described as a stand-alone platform (e.g. a single application or set of applications that run on a user's computer processing system and perform the techniques described herein without requiring server-side operations). The techniques described herein can, however, be performed (or be adapted to be performed) by a client-server type design platform (e.g., one or more client applications and one or more server applications that interoperate to perform the described techniques).

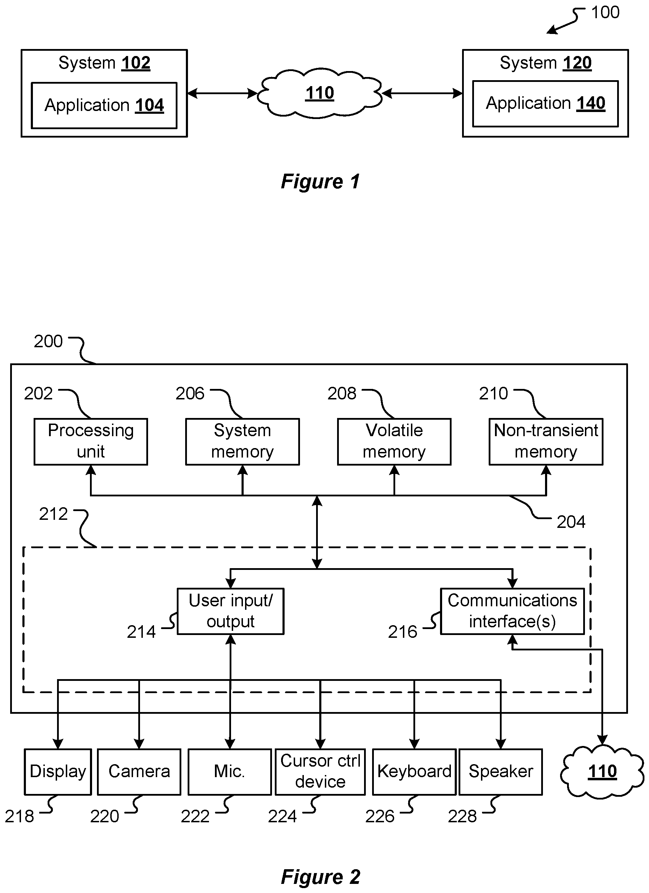

FIG. 1 depicts a computer system 102 that is configured to perform the various functions described herein. The computer system 102 may be any suitable type of computer processing system, for example a desktop computer, a laptop computer, a tablet device, a smart phone device, or an alternative computer processing system.

In this example, the computer system 102 is configured to perform the functions described herein by execution of a software application 104 - that is, computer readable instructions that are stored in a storage device (such as non-transient memory 110 described below) and executed by a processing unit of the system 102 (such as processing unit 202 described below).

In the present example, the software application 104 (and/or other applications of system 102) facilitates various functions related to digital documents in addition to the processing of resizable regions of a digital document to resize such regions and to automatically determine the layout of document elements positioned within such regions. These additional functions may include, for example, design creation, editing, storage, organisation, layout adjustment, searching, storage, retrieval, viewing, sharing, publishing, and/or other functions related to digital documents.

For example and with reference to design creation, a user may use the application 104 to create a digital document and the application 104 may be configured to process a resizable region of the digital document to determine a new layout for a resize of the resizable region. This may be saved as a new document created by the application 104. Alternatively, the application 104 may receive a digital document created by another application and perform this processing of a resizable region of the digital document.

In the example of FIG. 1, the computer system 102 is connected to a communications network 110. Via communications network 110 the computer system 102 can communicate with (e.g. send data to and receive data from) other computer processing systems, for example the computer system 120. For example, a document produced by the system 102 using the application 104 may be published to or by the system 120, which might for instance operate as or make the document available to a web server. A specific example is the communication by the computer system 102 of a digital document to the computer system 120 for publication in a social media post. The techniques described herein can, however, be implemented on a stand-alone computer system that does not require network connectivity or communication with other systems.

It will be appreciated that the general arrangement of FIG. 1 is also applicable to a client-server arrangement. In that case the computer system 120 may operate as a client system, which provides a user interface and which requests at least processing of a resizable region by the computer system 102, utilising the application 104. The computer system 120 includes an application 140, for example a web browser, in which case the system 102 may implement a web server.

In FIG. 1, the computer system 102 is depicted as having/executing a single application 104. However, the computer system 102 may (and typically will) include additional applications (not shown). For example, and assuming the application 104 is not part of an operating system application, the computer system 102 will include a separate operating system application (or group of applications).

### Computer processing system

Turning to FIG. 2, a block diagram depicting hardware component of a computer processing system 200 is provided. The computer system 102 or the computer system 120 of FIG. 1 may be a computer processing system such as the computer processing system 200 (though alternative hardware architectures are possible).

Computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and useable by (either in a shared or dedicated manner) system 200.

Through a communications bus 204 the processing unit 202 is in data communication with a one or more machine readable storage devices (also referred to as memory devices). Computer readable instructions and/or data which are executed by the processing unit 202 to control operation of the processing system 200 are stored on one more such storage devices. In this example system 200 includes a system memory 206 (e.g., a BIOS), volatile memory 208 (e.g., random access memory such as one or more DRAM modules), and non-transient memory 210 (e.g., one or more hard disk or solid state drives).

The computer processing system 200 also includes one or more interfaces, indicated generally by 212, via which the computer processing system 200 interfaces with various devices and/or networks. Generally speaking, other devices may be integral with the computer processing system 200, or may be separate. Where a device is separate from the computer processing system 200, connection between the device and the computer processing system 200 may be via wired or wireless hardware and communication protocols, and may be a direct or an indirect (e.g. networked) connection.

Generally speaking, and depending on the particular system in question, devices to which the computer processing system 200 connects - whether by wired or wireless means - include one or more input devices to allow data to be input into/received by the computer processing system 200 and one or more output device to allow data to be output by the computer processing system 200.

By way of example, where the computer processing system 200 is a personal computing device such as a desktop or laptop device, it may include a display 218 (which may be a touch screen display and as such operate as both an input and output device), a camera device 220, a microphone device 222 (which may be integrated with the camera device), a cursor control device 224 (e.g. a mouse, trackpad, or other cursor control device), a keyboard 226, and a speaker device 228.

As another example, where the computer processing system 200 is a portable personal computing device such as a smart phone or tablet it may include a touchscreen display 218, a camera device 220, a microphone device 222, and a speaker device 228.

As another example, where the computer processing system 200 is a server computing device, it may be remotely operable from another computing device via a communication network. Such a server may not itself need/require further peripherals such as a display, keyboard, cursor control device etc. (though may nonetheless be connectable to such devices via appropriate ports).

Alternative types of computer processing systems, with additional/alternative input and output devices, are possible.

The computer processing system 200 also includes one or more communications interfaces 216 for communication with a network, such as network 110 of FIG. 1. Via the communications interface(s) 216, system 200 can communicate data to and receive data from networked systems and/or devices.

The computer processing system 200 stores or has access to computer applications (also referred to as software or programs) - i.e., computer readable instructions and data which, when executed by the processing unit 202, configure the computer processing system 200 to receive, process, and output data. Instructions and data can be stored on non-transient machine readable medium such as 210 accessible to the computer processing system 200. Instructions and data may be transmitted to/received by the computer processing system 200 via a data signal in a transmission channel enabled (for example) by a wired or wireless network connection over an interface such as communications interface 216.

Typically, one application accessible to the computer processing system 200 will be an operating system application. In addition, the computer processing system 200 will store or have access to applications which, when executed by the processing unit 202, configure the computer processing system 200 to perform various computer-implemented processing operations described herein. For example, in FIG. 1 computer processing system 100 (which may be or include the hardware components of the computer processing system 200) includes and executes application 104.

It will be appreciated that FIG. 2 does not illustrate all functional or physical components of a computer processing system. For example, no power supply or power supply interface has been depicted, however the computer processing system 200 will either carry a power supply or be configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

### Automatic layout determination

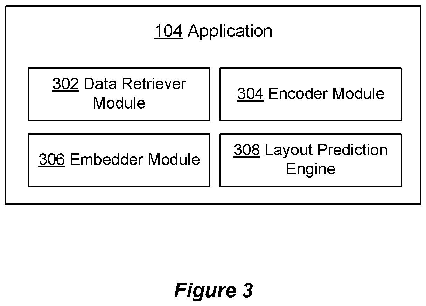

Turning to FIG. 3, various modules of the application 104 of FIG. 2 are shown, which include a data retriever module 302, an encoder module 304, an embedder module 306, a layout prediction engine 308. It will be appreciated that application 104 may have additional modules (e.g., involving designing digital documents and graphical user interfaces thereof) and/or the functionality described in relation to each module 302-308 may be provided by a more or less number of modules.

The reference to modules is intended to refer to certain functions or a collection of operations for the purposes of explanation. It is not intended to limit the disclosure to any particular form of the application 104. For example, the application 104 may or may not have been created using modular programming techniques and if modular programming techniques were used, the modules need not correspond to those depicted in FIG. 3.

Data retriever module 302 retrieves or otherwise receives resizable region data, region modification data, and, optionally, excluded elements data. Such data may be retrieved or received from a variety of sources. By way of example, such data may be retrieved from a file stored in a database, the file containing data in relation to a digitally designed document. The database may be, e.g., in the non-transient memory 210. By way of another example, such data may be received from communication interface 216. After retrieving or receiving the data, module 302 makes it available for other modules of application 104 (e.g., by storing in a database shared between various modules of application 104 or directly passing to other such modules).

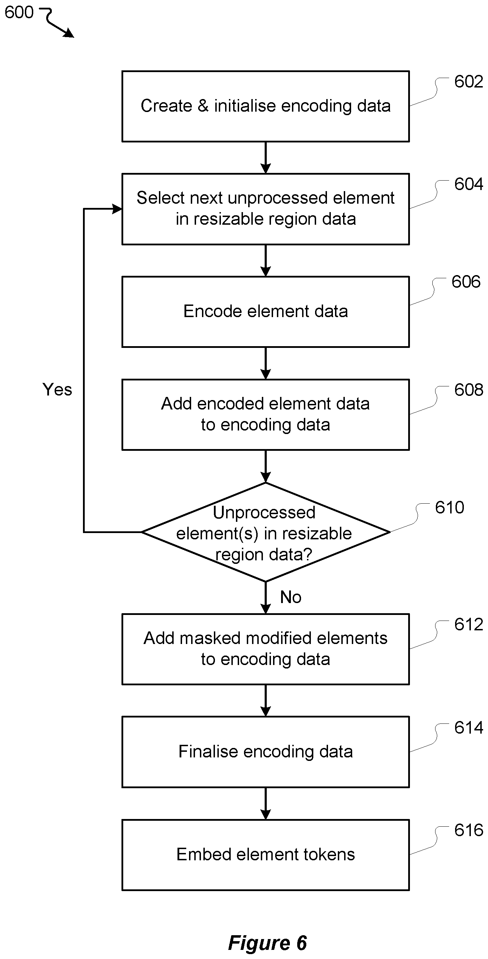

Encoder module 304 and embedder module 306 retrieve or receive resizable region data and region modification data and prepare such data for processing by layout prediction engine 308 (described below). In summary, encoder module 304 transforms the data into an encoded format which is then further transformed by embedder module 306 to become suitable for processing by a machine learning model. Modules 306 and 308 may store the resulting transformed data in the database. Detailed operations of modules 304 and 306 are described later in relation to FIG. 6.

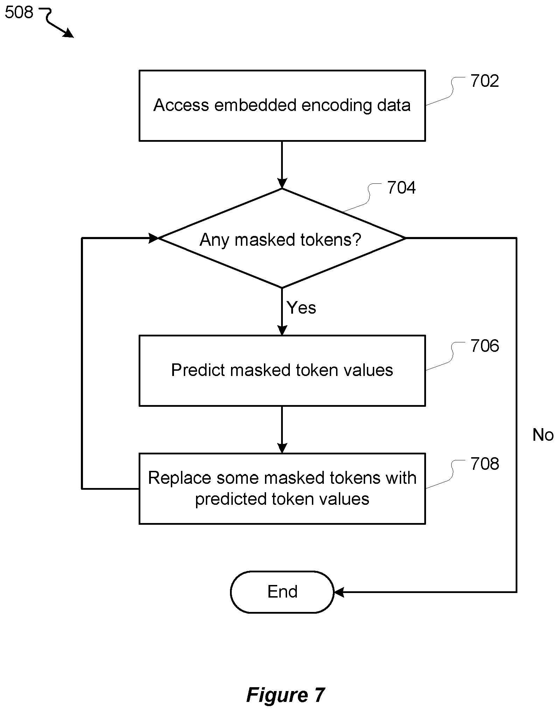

Layout prediction engine 308 retrieves or receives the transformed resizable region data and region modification data and determines modified elements data. In one embodiment, layout prediction engine 308 uses a trained machine learning model to make such determination through an iterative process. The layout prediction engine 308 may store the elements data in a database. Detailed operations of module 308 are described later in relation to FIG. 7.

The modified elements data may be used in a variety of ways. By way of example, such data may be used by a document designer software application to automatically update the positions and sizes of the corresponding document elements within the resizable region, which is typically also reflected in the graphical user interface of such designer application. By way of another example, updated elements data may be used to update a file stored on non-transient memory 210 containing data in relation to a digitally designed document. By way of another example, such data may be sent to another system through communication interface 216 for further processing.

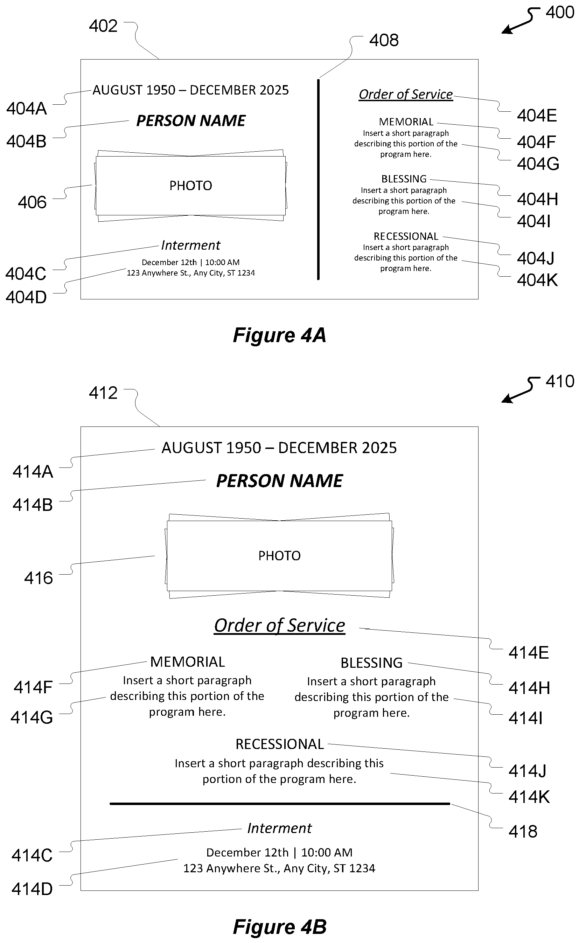

Turning to FIG. 4A, an example document page 400 is shown that includes a number of document elements. Specifically, page 400 includes a border 402, eleven text elements collectively referred to as text elements 404 (including text elements 404A-404K), an image element 406, and a line element 408.

In this example, resizable region corresponds to the entirety of document page 400 depicted by border 402. Accordingly, resizable region data includes page width and page height of page 400 (i.e., width and height of border 402) as well as a list of element descriptors describing document elements 404-408 which are associated with page 400.

Turning to FIG. 4B, an example resized page 410 is shown that includes a number of document elements corresponding to the document elements included in page 400. Specifically, page 410 includes a border 412, eleven text elements collectively referred to as text elements 414 (including text elements 414A-414K), an image element 416, and a line element 418.

In this example, region modification data corresponds to the area of document page 410 depicted by border 412. Accordingly, region modification data includes at least page width and page height of page 410 (i.e., width and height of border 412).

In this example, application 104 retrieves resizable region data (in relation to page 400) and region modification data (in relation to page 410). Application 104 retrieves such data through data retriever module 302. For the purpose of this example, it is assumed that no elements are excluded from the process (i.e., excluded elements data does not refer to any document elements).

Application 104 then prepares the data through encoder module 304 and embedder module 306 for processing by layout prediction engine 308.

Layout prediction engine 308 receives the prepared data and determines modified elements data (modified position and size of each document element given the dimensions of page 410).

Modified elements data can then be used to update the locations and sizes of document elements 414-418 on page 410. FIG. 4B depicts a modified layout corresponding to an example modified elements data produced by engine 308.

### Layout determination process

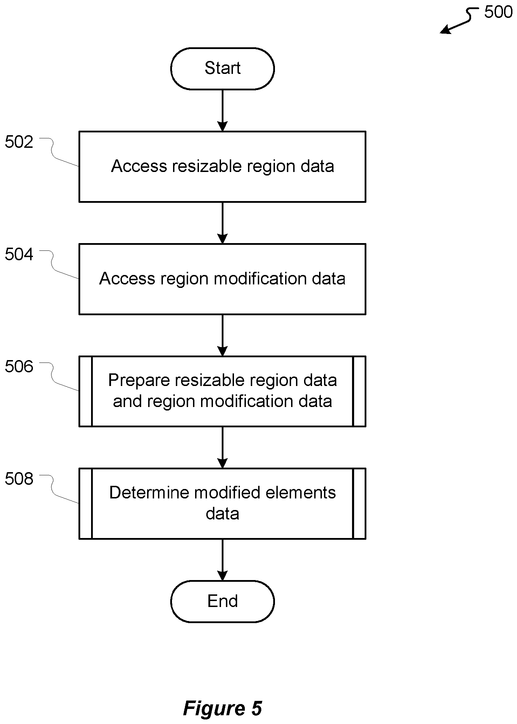

Turning to FIG. 5, a computer implemented method for automatic layout determination will be described. As noted above, the operation of method 500 will be described as being performed by application 104 running on computer processing system 102. In alternative embodiments, however, the processing described may be performed by one or more alternative applications running on system 102 and/or other computer processing systems.

At steps 502 and 504, application 104 respectively accesses resizable region data and region modification data.

Resizable region data defines a resizable region and its associated document elements. Where a resizable region corresponds to a document page, resizable region data may include, e.g., a page descriptor. A page descriptor, as described earlier, includes page metadata and an array of element descriptors.

Page metadata includes at least dimension data associated with the page. By way of example, such dimension data may correspond to page width and page height of document page 400 depicted by border 402.

An array of element descriptors included in a page descriptor defines one or more document elements associated with the document page. Each element descriptor may include a variety of data items such as element identifier, class, position, and dimensions etc. By way of example, the array of element descriptors associated with document page 400 may include document elements 404-408.

Region modification data defines the data necessary to resize a resizable region (such as document page 400) and typically includes new region width and region height data. By way of example, region modification data may include new width and new height of a document page corresponding to page 410 (depicted by border 412).

At step 506, application 104 prepares resizable region data and region modification data for further processing. The preparation of such data involves a number of steps, which are described below in relation to FIG. 6.

At step 508, application 104 determines modified elements data. Such determination involves a number of steps, which are described below in relation to FIG. 7.

Turning to FIG. 6, a method 600 for preparing resizable region data and region modification data will be described. The method 600 may be applied, for example, to complete step 506 of the method 500. As noted above, the operation of method 600 will be described as being performed by the application 104 running on computer processing system 102. In alternative embodiments, however, the processing described may be performed by one or more alternative applications running on system 102 and/or other computer processing systems.

At step 602, application 104 creates a new encoding data, which, by the end of method 600, will represent a combination of resizable region data and region modification data in a data format suitable for processing by a machine learning model (e.g., a BERT-like model).

At step 602, application 104 may also initialise the newly created encoding data. The initialisation may involve a number of steps, for example, to add a preamble to the encoding data. By way of example, the initialisation may involve adding certain data tokens to mark the beginning of the data (e.g., a special token "BOS" to denote the beginning of sequence). The initialisation may also involve adding dimension data and region modification data to the encoding data.

In some embodiments, dimension data (e.g., width and height of document page 400) and region modification data (e.g., new width and height corresponding to page 410) may be transformed to proportion change values associated with the desired width and height change. This may be achieved, for example, by the following equations where *source_width* and *source_eight* correspond to dimension data, and *target_width* and *target_height* correspond to region modification data:

| |
|---|
| change_in_width = target_width / source_width |
| change_in_height = target_height / source_height |

By way of example, assuming that the resizable region has a dimension of 720 by 1,080, and that region modification data represents a region with dimensions of 1,080 by 1,080, the encoding data produced at step 602 may resemble the following:

| |
|---|
| BOS, |
| CHANGE, 1.5, 1, |

At step 604, application 104 may select next unprocessed document element in resizable region data. Referring to example document page 400, an unprocessed document element may be any of elements 404-408 that is yet to be added to encoding data. For example, at step 604 application 104 may select document element 404A for processing.

At step 606, application 104 encodes elements data associated with the document element selected at step 604. The aim of such encoding is to transform elements data into data appropriate for the machine learning model. For example, the aim of step 606 may be to transform elements data to the corresponding integer representations suitable for BERT-like models. The process of encoding such data may involve a number of steps. In one embodiment, such encoding may involve discretising and tokenising elements data.

Discretising elements data involves transforming floating-point coordinates associated with document elements into their closest integer values. Discretisation may be utilised, for example, when the machine learning model that is used is not able to process floating-point numbers (e.g., BERT model).

In one embodiment, discretisation may be akin to splitting up the resizable region into a grid-like system with a number of rows and columns respectively referred to as width resolution and height resolution.

In one embodiment, the grid may be a uniform grid, that is, its width and height resolutions may be equal (e.g., 32 by 32 or 256 by 256). Each cell of the grid represents a Cartesian coordinate represented by integer numbers (x, y) and any floating-point number falling within that cell will be mapped to the coordinate represented by the cell.

By way of example, the table below includes some top-left coordinate values before and after discretisation for some example document elements in relation to document page 400.

| Document element | Before discretisation | After discretisation |
|---|---|---|
| 404A | (1.1, 3.9) | (1, 3) |
| 404B | (5.1, 8.3) | (5, 8) |
| 406 | (1.3, 13.5) | (1, 13) |
| ... | | |

It will be appreciated that a similar process may be applied to discretise width and height of each document element.

It will also be appreciated that other methods may be used for encoding values. In some embodiments, a combination of several methods may be used to encode various types of values. For example, in one embodiment any negative coordinate value (e.g., indicating a document element that is placed partially outside of a resizable region but included within the set of its associated document elements) may be changed to zero. In one embodiment, such negative coordinates may be transformed with a quantisation scheme that maps the negative values to a range of [0, V-1], where V is the maximum vocabulary size. In one embodiment, all values or a subset of values (e.g., negative signed values) may be transformed using a K-means clustering algorithm.

As described earlier, in one embodiment step 606 may also involve tokenising elements data. Tokenisation may involve transforming elements data into a data format suitable for processing by a machine learning model. In one embodiment, the encoded elements data may be represented in the following format. It will be appreciated that other suitable formats may be used and/or the number of attributes representing a document element may differ.

| |
|---|
| <elem> = [<class>, <top x>, <left y>, <width>, <height>] |

At step 608, application 104 adds the encoded elements data to encoding data.

At step 610, application 104 determines whether there are any unprocessed document elements remaining in resizable region data for the purpose of encoding. If unprocessed document elements exist, the process returns back to step 604 where application 104 select the next unprocessed document element for encoding.

Continuing with the example described earlier, assuming only example document element 404A is processed so far, application 104 may return to step 604 to select another document element such as 404B for processing. On the other hand, if at step 610 application 104 determines that all document elements are encoded, application 104 proceeds to step 612.

By way of example, and referring to example document page 400, and assuming that only document elements 404A, 404B and 406 are processed (i.e., there are more document elements to process), the encoding data may resemble the following example.

| |
|---|
| BOS, |
| CHANGE, 1.5, 1, |
| TEXT, 1, 3, 18, 2, ELEMENT_SEP, |
| TEXT, 5, 8, 10, 2, ELEMENT_SEP, |
| IMAGE, 1, 13, 18, 12, ELEMENT_SEP, |
| ... |

Special token ELEMENT_SEP is optionally used as a separator to disambiguate different document elements in the above example and in the additional examples described below. In some embodiments ELEMENT_SEP tokens are omitted.

At step 612, application 104 adds masked modified elements data to the encoding data. Such masked data is included in encoded data as placeholders. The machine learning model (e.g., a BERT-like model) will process the masked data and determine modified elements data.

At step 614, application 104 finalises the encoding data. This step may involve appending any necessary data to the encoding data to ensure it is complete and in the expected format. For example, this step may involve appending a special token EOS to indicate the end of sequence.

Step 614 may also involve adding padding to the encoded data. This may be necessary as some machine learning models (e.g., BERT) have a fixed input length (e.g., 512 tokens). To ensure that encoding data fits such a limit, PAD tokens may be introduced to increase the number of tokens in encoding data and to indicate to the machine learning model that such tokens are not important for determining layouts.

By way of example, when all the document elements included in example page 400 are encoded, at the end of step 614 application 140 may produce an encoding data resembling the following. For brevity, not all the document elements are shown in the following example. Special document element SEP is used to separate elements data from placeholders for modified elements data.

| |
|---|
| BOS, |
| CHANGE, 1.5, 1, |
| TEXT, 1, 3, 18, 2, ELEMENT_SEP, |
| TEXT, 5, 8, 10, 2, ELEMENT_SEP, |
| IMAGE, 1, 13, 18, 12, ELEMENT_SEP, |
| ... |
| SEP, |
| TEXT, MASK, MASK, MASK, MASK, ELEMENT_SEP, |
| TEXT, MASK, MASK, MASK, MASK, ELEMENT_SEP, |
| IMAGE, MASK, MASK, MASK, MASK, ELEMENT_SEP, |
| ... |
| EOS |

At step 616, application 104 embeds element tokens. Tokenisation in natural language processing (NLP) is the process of converting tokens into numerical vectors that machine learning models can understand and process.

In one embodiment, application 104 may assign each special token with a unique integer value starting from zero. For example, special tokens used in the above examples may be assigned the following values:

| |
|---|
| BOS = 0 |
| CHANGE = 1 |
| ELEMENT_SEP = 2 |
| SEP = 3 |
| MASK = 4 |
| TEXT = 5 |
| IMAGE = 6 |
| EOS = 7 |
| ... |

Accordingly, at the end of step 616 application 104 may finalise the data preparation by producing a data structure that resembles the following. Similar to previous examples and for brevity, not all the document elements on example page 400 are shown in the following example.

| |
|---|
| 0, |
| 1, 1.5, 1 |
| 5, 1, 3, 18, 2, 2, |
| 5, 5, 8, 10, 2, 2, |
| 6, 1, 13, 18, 12, 2, |
| ... |
| 3, |
| 5, 4, 4, 4, 4, 2, |
| 5, 4, 4, 4, 4, 2, |
| 6, 4, 4, 4, 4, 2, |
| ... |
| 7 |

Turning to FIG. 7, a computer implemented method for determining modified elements data will be described. This method predicts the values that should be associated with modified elements data over multiple iterations. This allows iteratively refining predictions for masked tokens, deciding certain tokens to remain masked for subsequent iterations based on a decay function.

At step 702, application 104 accesses embedded encoding data. The preparation of this data was described in relation to step 506 and the method 600. The embedded encoding data corresponds to the data prepared at the end of step 616.

At step 704, application 104 determines whether there are any masked tokens included in the embedded encoding data. As described earlier in relation to step 506 and method 600, initially the embedded encoding data includes masked token values for modified elements data (i.e., all coordinate and width/height tokens in relation to modified elements data are masked). At step 704, if there are any masked modified elements data available, then application 104 proceeds to step 706. Otherwise, method 508 ends.

At step 706, application 104 predicts masked token values. In one embodiment, such prediction is performed by using a trained machine learning model. The model may produce a prediction and a confidence probability value for each masked modified value. It will be appreciated that other pre-trained or bespoke machine learning models may be used at this step to produce such predictions.

At step 708, application 104 replaces a number of masked tokens with predicted token values. In one embodiment, the number of tokens to keep masked for the next iteration is determined based on a decay function. In one embodiment, a decay function with an acceptable performance may be *cos(pi *x*/*2),* which may also be used in diffusion applications for image generation. In other embodiments, other decay functions may be used (e.g., *1-x* or *sqrt(x))..*

In one embodiment, the decision to keep a specific token masked for the next iteration is made based on the confidence probability value associated with the prediction made for the token. In another embodiment, the same decision may be made based on some randomness by, e.g., using the Gumbel softmax probability distribution to sample from the token probabilities. Inclusion of randomness may increase diversity in the predictions. It will be appreciated that such decision may be made based on other functions and/or a combination of functions.

After replacing a number of the masked tokens with prediction values at step 708, application 104 proceeds to step 704 where it determines whether there are any further masked tokens to be unmasked. If so, application 104 executes another prediction iteration (706 and 708). Otherwise, modified elements data is determined and method 508 ends.

Returning to FIG. 5 and method 500, at the end of step 508 application 104 determines modified elements data. This data may be used in various ways given the context. For example, a designer application may use modified elements data to automatically adjust the layout or a resizable region (e.g., to place elements 414-418, which correspond to original document elements 404-408, on the resized page 410). In another example, application 104 may store modified elements data in a data file on non-transient memory 210 for further processing.

### Partial layout determination process

In an alternative embodiment, at step 612, application 104 may add masked modified elements data to the encoding data only for the characteristics of document elements that are not specified in excluded elements data. Accordingly, there may be fewer characteristics that the machine learning model will need to determine at step 508.

As described earlier, the exclusion of certain characteristics of document elements may be desirable for a variety of reasons (e.g., to allow a document designer to manually specify the characteristics of certain document elements). Given application 104 may not add masked modified elements data to the encoding data for such excluded elements, the provision of the characteristics of the document elements specified in excluded elements data to the machine learning model may guide the model in determining the characteristics of other document elements (i.e., the masked elements) by providing additional data effectively conditioning the operation of the model.

By way of example, assuming excluded elements data refers to the image element 406 presented in the above example and specifies the values of [top x = 8, left y = 10, width = 23, height = 14] for that element, then at the end of step 614 application 140 may produce an encoded data resembling the following:

| |
|---|
| BOS, |
| CHANGE, 1.5, 1, |
| TEXT, 1, 3, 18, 2, ELEMENT_SEP, |
| TEXT, 5, 8, 10, 2, ELEMENT_SEP, |
| IMAGE, 1, 13, 18, 12, ELEMENT_SEP, |
| ... |
| SEP, |
| TEXT, MASK, MASK, MASK, MASK, ELEMENT_SEP, |
| TEXT, MASK, MASK, MASK, MASK, ELEMENT_SEP, |
| IMAGE, **8, 10, 23, 14,** ELEMENT_SEP, |
| ... |
| EOS |

Continuing with the above example, at the end of step 616 application 104 may finalise the data preparation by producing a data structure that resembles the following:

| |
|---|
| 0, |
| 1, 1.5, 1 |
| 5, 1, 3, 18, 2, 2, |
| 5, 5, 8, 10, 2, 2, |
| 6, 1, 13, 18, 12, 2, |
| ... |
| 3, |
| 5, 4, 4, 4, 4, 2, |
| 5, 4, 4, 4, 4, 2, |
| 6, **8, 10, 23, 14,** 2, |
| ... |
| 7 |

In one embodiment, excluded elements data may specify not all but only a subset of attributes associated with a document element. For example, excluded elements data may only specify [top x, top y, width] and not specify [height] in relation to image element discussed in the above example. In general, any characteristic of a document element that is not specified in excluded elements data may be indicated by a mask special token and later determined by the machine learning model.

It will be appreciated that using mask tokens may only be one way of signalling to the machine learning model that certain characteristics of document elements may be determined by the machine learning model. In other embodiments, other methods of signalling to the machine learning model may be used (e.g., including additional data in the encoding data).

In one embodiment, excluded elements data may specify a larger number of document elements and varying number of characteristics per element. In one embodiment, the excluded elements data may not refer to any elements.

### Machine learning model training

In training a machine learning model that may be used in method 508, a data set consisting of original layouts (each layout including a number of elements) and their corresponding resized layouts (each layout including the corresponding number of resized/repositioned document elements) are used. A larger training data set may generally result in improved training of the model. For example, a training model may approximately include 100,000 unique original layouts and the corresponding resized layouts. Presence of certain characteristics in a training data set may result in improved training. Such data set characteristics may include uniqueness of layouts, existence of a diverse range of element types (e.g., lines, texts, images etc.), a high variation of source and target aspect ratios (an equal number per source-target aspect ratio may be the best combination), and a maximum number of elements per layout that matches the limitations of the model (e.g., 40 elements and below).

The objective of the model during training is to determine how to predict masked elements with the correct values. The determined values are compared to the ground truth. In one embodiment, a cross-entropy loss may be used to score how well the model predicts the right values.

Preparation of data for the purpose of training is substantially the same as the preparation of data in step 506 and the method 600.

The training involves multiple iterations. During each iteration, certain tokens included in modified elements data are masked and the machine learning model is expected to make predictions for the masked tokens.

In order to determine the tokens which should be masked, a masking rate may be used. The masking rate may be a floating point value ranging between 0 and 1, where a value of 1 may denote full masking (i.e., every location and position data is masked for all document elements included in modified elements data).

In some embodiments, application 104 may select a random masking rate in each training iteration. This choice of rate followed a predefined schedule and calculated via a predefined function. In one embodiment, a cosine-like function may be used. It will be appreciated that other functions and/or a combination of different functions may be used for calculating a training schedule.

Using an iterative training with a different and gradually increasing masking rate in each iteration emulates the process of iteratively predicting modified elements data previously described in relation to step 508 of method 500.

The flowcharts illustrated in the figures and described above define operations in particular orders to explain various features. In some cases the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations. Still further, the functionality/processing of a given flowchart operation could potentially be performed by different systems or applications.

Unless otherwise stated, the terms "include" and "comprise" (and variations thereof such as "including", "includes", "comprising", "comprises", "comprised" and the like) are used inclusively and do not exclude further features, components, integers, operations, steps, or elements.

Unless required by context, the terms "first", "second", etc. are used to differentiate between various elements and features and not in an ordinal sense. For example, a first glyph set could be termed a second glyph set, and, similarly, a second glyph set could be termed a first glyph set, without departing from the scope of the described examples.

It will be understood that the embodiments disclosed and defined in this specification extend to alternative combinations of two or more of the individual features mentioned in or evident from the text or drawings. All of these different combinations constitute alternative embodiments of the present disclosure.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.

## Claims

1. A computer implemented method for document element layout adjustment, the method including:
accessing, by a computer system, region data defining a region of a document, wherein the region data includes:
dimension data defining dimensions of the region, and
elements data defining layout characteristics of a plurality of document elements within the region;
accessing, by the computer system, region modification data describing data to resize the region;
encoding, by the computer system, the dimension data, the elements data and the region modification data into encoding data;
inputting, by the computer system, the encoding data into a trained machine learning model that, in response, determines modified elements data defining a modification to the layout characteristics of one or more of the plurality of document elements based on the region modification data; and
outputting data defining an adjusted layout of the document, wherein the adjusted layout is defined by the modified elements data.

2. The computer implemented method of claim 1 wherein the region modification data specifies a change in aspect ratio of the region.

3. The computer implemented method of claim 2 wherein the region modification data specifies a change in size of the region.

4. The computer implemented method of any one of claims 1 to 3 wherein the encoding of the elements data includes discretising the elements data to transform floating-point coordinate, width and height values into discretised values.

5. The computer implemented method of claim 4 wherein the discretising is based on K-means clustering.

6. The computer implemented method of claim 5 wherein the encoding further includes adding mask tokens into the encoding data, the mask tokens being placeholders for the modified characteristics of document elements which are to be determined by the machine learning model.

7. The computer implemented method of claim 5 wherein the encoding further includes tokenising the encoding data into numerical vectors.

8. The computer implemented method of any one of claims 1 to 7, further including:
accessing, by the computer system, excluded elements data defining which layout characteristics of which document elements are to be excluded from the document element layout adjustment method, wherein the excluded elements data includes:
references to one or more document elements defined by the elements data, and
layout characteristics of each of the referenced document elements wherein such layout characteristics are to be excluded from the document element layout adjustment method;
wherein:
the encoding data is first encoding data;
the method further includes modifying, by the computer system, the first encoding data based on the excluded elements data into second encoding data; and
the encoding data input into the trained machine learning model is the second encoding data.

9. The computer implemented method of claim 8 wherein the modifying of the encoding data based on excluded elements data includes:
determining, based on the excluded elements data, which layout characteristics of which document elements included in the elements data are to be determined by the machine learning model; and
modifying the encoding data to distinguish each layout characteristic of each document element included in the elements data that is not to be determined by the machine learning model.

10. The computer implemented method of claim 9 wherein modifying the encoding data to distinguish each layout characteristic of each document element included in the elements data involves including in the encoding data one or more of the layout characteristics of each of the referenced document elements included in excluded elements data.

11. The computer implemented method of any one of the preceding claims wherein the outputting of the data defining the adjusted layout of the document comprises generating an adjusted document, the adjusted document having a layout of the document elements according to the modified elements data.

12. The computer implemented method of any one of the preceding claims wherein the region data defines a page of the document and the data to resize the region is page resize data.

13. The computer implemented method of any one of the preceding claims wherein the trained machine learning model was trained based on a set of original layouts and corresponding resized layouts, the corresponding resized layouts including repositioned document elements.

14. The computer implemented method of claim 13, wherein the resized layouts include document elements that have been resized.

15. A computer processing system including:
a processing unit; and
a non-transient computer-readable storage medium storing instructions, which when executed by the processing unit, cause the processing unit to perform a method according to any one of claims 1 to 14.
